# EUROPÄISCHE PATENTSCHRIFT

(11) **EP 4 251 669 B1**
(45) Veröffentlichungstag und Bekanntmachung des Hinweises auf die Patenterteilung: **21.08.2024**
(21) Anmeldenummer: 21807153.8
(22) Anmeldetag: 22.11.2021
(51) Int. Cl.: C08G 18/12, C08G 18/40, C08G 18/42, C08G 18/48, C08G 18/76, C08G 18/79, C08L 75/04, C09D 175/04

(54) **POLYURETHANE MIT REDUZIERTER ALDEHYDEMISSION**
POLYURETHANES WITH REDUCED ALDEHYDE EMISSION
POLYURÉTHANES À ÉMISSION RÉDUITE D'ALDÉHYDE

(30) Priorität: 25.11.2020 EP 20209817
(43) Veröffentlichungstag der Anmeldung: 04.10.2023
(73) Patentinhaber: BASF SE, 67056 Ludwigshafen am Rhein (DE)
(72) Erfinder: TOMOVIC, Zeljko, 47906 Kempen (DE); KOENIG, Christian, 67056 Ludwigshafen (DE)
(74) Vertreter: BASF IP Association
(86) Internationale Anmeldenummer: PCT/EP2021/082467
(87) Internationale Veröffentlichungsnummer: WO 2022/112157

(56) Entgegenhaltungen:
- WO-A1-2016/020199
- WO-A1-2016/020201
- WO-A1-2017/207687
- WO-A1-2020/024233

## Beschreibung

Die vorliegende Erfindung betrifft Verfahren zur Herstellung von Polyurethanen bei dem man (a) Polyisocyanat, (b) polymeren Verbindungen mit gegenüber Isocyanaten reaktiven Gruppen, (c) gegebenenfalls Katalysatoren, (d) Verbindungen der allgemeinen Formel W-Kw-NH-C(O)-CH₂-Q und gegebenenfalls (e) Treibmittel, (f) Kettenverlängerungs- und oder Vernetzungsmittel und (g) Hilfsmittel und/oder Zusatzstoffe, zu einer Reaktionsmischung vermischt und die Reaktionsmischung zum Polyurethan ausreagieren lässt, wobei W für eine cyclisches Amin steht, das substituiert sein kann und das über ein Stickstoffatom an Kw gebunden ist, Kw für einen linearen oder verzweigtkettigen Kohlenwasserstoffrest steht, N für ein Stickstoffatom, C für ein Kohlenstoffatom, O für ein Sauerstoffatom und H für ein Wasserstoffatom steht und Q für Cyanid (CN) oder einen elektronenziehenden Rest der allgemeinen Formel -C(O)-R² steht und R² für einen Rest steht, ausgewählt ist aus der Gruppe bestehend aus -NH₂, -NH-R³ -NR⁴R⁵, OR⁶ oder R⁷, wobei R³, R⁴, R⁵, R⁶ und R⁷ unabhängig ausgewählt sind aus der Gruppe bestehend aus aliphatischen, araliphatischen oder aromatischen Kohlenwasserstoffen, die substituiert sein können. Insbesondere wird als Verbindung (d) eine Verbindung der allgemeinen Formel W-Kw-NH-C(O)-CH₂-C(O)-NH-Kw-W eingesetzt, wobei weiter bevorzugt -Kw- und -W jeweils identisch sind. Weiter betrifft die vorliegende Erfindung ein Polyurethan, herstellbar nach einem erfindungsgemäßen Verfahren sowie die Verwendung eines solchen Polyurethane in geschlossenen Räumen, beispielsweise in Verkehrsmitteln.

Polyurethane zeichnen sich durch vielfältige Einsatzmöglichkeiten aus, beispielsweise in der Möbelindustrie als Sitzpolster oder als Bindemittel für Spanplatten, als Isoliermaterial in der Bauindustrie, als Isoliermaterial, beispielsweise von Rohren, Warmwasserspeichern oder Kühlschränken und als Verkleidungsteile, beispielsweise im Fahrzeugbau. Insbesondere im Automobilbau werden Polyurethane häufig eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster.

Dabei ist bekannt, dass Polyurethane zu Emissionen organischer Substanzen neigen, die zu Geruchsbelästigungen oder im Fall von hohen Konzentrationen zu Unwohlsein führen können. Dabei sind insbesondere abgeschlossene Räume, beispielsweise im Innern von Gebäuden oder Fahrzeugen, beispielsweise Automobilen besonders betroffen. Ein Beispiel für solche Emissionen ist die Emission von Aldehyden. Dabei gibt es bereits unterschiedliche Ansätze zur Verringerung der Aldehydemissionen.

So beschreibt Beispielsweise EP 1428847, dass Aldehydemissionen durch nachträgliche Zugabe von polymeren Stoffen mit primären und/oder sekundären Aminogruppen vermindert werden können. Verantwortlich für die Reduktion der Emissionen sind die Amingruppen im Polymer. Da diese gegenüber Isocyanat reaktiv sind und größtenteils durch Reaktion mit dem Isocyanat deaktiviert werden, sollte der polymere Wirkstoff auf den bereits hergestellten Schaum gegeben werden. Nachteilig ist hier ein umständliches Verfahren mit einem Zusätzlichen Schritt der Nachbehandlung des Schaumstoffs. Der Einsatz in kompakten Systemen oder geschlossenzelligen Schaumstoffen ist nicht möglich.

In US 20130203880 wird der Einsatz von Polyhydrazodicarbonamid als Substanz zur Reduktion von Aldehydemissionen in Polyurethanschaumstoffen beschrieben. Eine deutliche Reduktion von Aldehyden wird allerdings nur bei Zugabe einer großen Menge an Polyhydrazodicarbonamid von 2 bis 5,5 Gew.-% in der Polyolkomponente erreicht. Da Polyhydrazodicarbonamid ebenfalls katalytische Eigenschaften aufweist, wird durch die Zugabe dieser Substanz in dieser Größenordnung das Reaktionsprofil geändert. Weiter ist die erreichte Aldehydreduktion selbst bei Einsatz großer Mengen an Polyhydrazodicarbonamid weiter verbesserungswürdig.

WO 2015082316 beschreibt den Einsatz von CH-Aciden Verbindungen der allgemeinen Formel R¹-CH₂-R², wobei R¹ und R² unabhängig voneinander für einen elektronenziehenden Rest steht, zur Reduktion von Formaldehydemissionen in Kombination mit einbaubaren Katalysatoren. Dabei kann Formaldehyd wirksam reduziert werden, allerdings zeigen die Schaumstoffproben immer noch hohe Emissionen flüchtiger, organischer Substanzen (VOC). WO2020024233 offenbart Polyurethanschaumstoff mit reduzierter Aldehydemission.

Weiter sind aus EP629607 Aminocrotonsäureester bekannt, die als Katalysatoren bei der Herstellung von Polyurethanen eingesetzt werden können. WO2016020200 beschreibt Polyurethankatalysatoren ausgehend von tertiären Aminen, die eine Pyrrolidinstruktur aufweisen. WO2016020200 offenbart weiter, dass die beschriebenen Katalysatoren emissionsarm hinsichtlich Aldehydemissionen, insbesondere hinsichtlich von Formaldehydemissionen sind.

Aufgabe der vorliegenden Erfindung war es, Polyurethane, insbesondere Polyurethanschaumstoffe, zu liefern, deren Emissionsverhalten, insbesondere von Aldehyden, wie Formaldehyd verbessert ist und die ein auch ein hervorragendes Emissionsverhalten weiterer Verbindungen, wie Stickstoffhaltige Emissionen und Geruchsemissionen, verringert.

Die erfindungsgemäße Aufgabe wird gelöst durch ein Polyurethan, herstellbar nach einem Verfahren, bei dem man(a) Polyisocyanat, (b) polymeren Verbindungen mit gegenüber Isocyanaten reaktiven Gruppen, (c) gegebenenfalls Katalysatoren, (d) Verbindungen der allgemeinen Formel W-Kw-NH-C(O)-CH₂-Q und gegebenenfalls (e) Treibmittel, (f) Kettenverlängerungs- und oder Vernetzungsmittel und (g) Hilfsmittel und/oder Zusatzstoffe, zu einer Reaktionsmischung vermischt und die Reaktionsmischung zum Polyurethan ausreagieren lässt, wobei W für eine cyclisches Amin steht, das substituiert sein kann und das über ein Stickstoffatom an Kw gebunden ist, Kw für einen linearen oder verzweigtkettigen Kohlenwasserstoffrest steht, N für ein Stickstoffatom, C für ein Kohlenstoffatom, O für ein Sauerstoffatom und H für ein Wasserstoffatom steht und Q für Cyanid (CN) oder einen elektronenziehenden Rest der allgemeinen Formel - C(O)-R² steht und R² für einen Rest steht, ausgewählt ist aus der Gruppe bestehend aus -NH₂, -NH-R³ -NR⁴R⁵, OR⁶ oder R⁷, wobei R³, R⁴, R⁵, R⁶ und R⁷ unabhängig ausgewählt sind aus der Gruppe bestehend aus aliphatischen, araliphatischen oder aromatischen Kohlenwasserstoffen, die substituiert sein können.

Weiter betrifft die vorliegende Erfindung die Verwendung eines solchen Polyurethane in geschlossenen Räumen, beispielsweise in Verkehrsmitteln.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise sind die erfindungsgemäßen Polyurethane Polyurethanschaumstoffe oder massive Polyurethane, die, abgesehen von den im Folgenden erläuterten Polyurethanbausteinen (a) bis (g) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen PolyurethanHalbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei ist das erfindungsgemäße Polyurethan in einer bevorzugten Ausführungsform ein Polyurethanschaumstoff mit einer mittleren Dichte von 10 bis 850 g/L, vorzugsweise ein Polyurethanhalbhartschaumstoff oder ein Polyurethanweichschaumstoff oder ein Polyurethanhartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf. Der Polyurethanhalbhartschaumstoff weist vorzugsweise eine mittlere Dichte von 70 bis 150 g/L auf. Im Rahmen der vorliegenden Erfindung wird unter der mittleren Dichte eines Polyurethanschaumstoffs die Dichte des Schaumstoffs, gemittelt über den Polyurethananteil, beispielsweise in den Stegen und Lamellen des Schaumstoffs sowie des vom Polyurethanschaumstoffkörper umfassten Gases verstanden.

In einer weiteren bevorzugten Ausführungsform ist das Polyurethan ein massives Polyurethan mit einer Dichte von vorzugsweise mehr als 850 g/L, vorzugsweise 900 bis 1400 g/L und besonders bevorzugt 1000 bis 1300 g/L. Dabei wird ein massives Polyurethan ohne Zugabe eines Treibmittels erhalten. Geringe Mengen an Treibmittel, beispielsweise Wasser, das herstellungsbedingt in den Polyolen enthalten ist, ist dabei im Rahmen der vorliegenden Erfindung nicht als Treibmittelzugabe zu verstehen. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser.

Dabei wird das erfindungsgemäße Polyurethan vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze und ein massives Polyurethan beispielsweise als Kabelummantelung.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) (Bestandteil (a-2)) und/oder Kettenverlängerern (f) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279. Weiter können als die erfindungsgemäßen polymeren Verbindungen mit gegenüber Isocyanaten reaktiven Gruppen (b) mindestens ein Polyesterol eingesetzt werden, erhältlich durch Polykondensation einer Säurekomponente mit einer Alkoholkomponente, wobei die Säurekomponente Malonsäure und/oder deren Derivate und die Alkoholkomponente einen aliphatischen Dialkohol mit 4 bis 12 Kohlenstoffatomen enthält. Ihre Herstellung ist beispielweise beschrieben in WO 2019/149583.

In einer besonders bevorzugten Ausführungsform der vorliegenden Erfindung enthält die Komponente (b) Polyetherole und weiter bevorzugt keine Polyesterole.

Aufgrund der katalytischen Wirkung der Verbindungen der allgemeinen Formel W-Kw-NH-C(O)-CH₂-Q (d) kann der Einsatz weiterer Polyurethankatalysatoren reduziert werden. Werden weitere Katalysatoren (c) eingesetzt, können alle üblichen Polyurethankytalysatoren verwendet werden. Dabei enthalten die Katalysatoren (c) wenn eingesetzt vorzugsweise einbaubare Aminkatalysatoren, besonders bevorzugtbestehen die Katalysatoren (c) aus einbaubaren Aminkatalysatoren. Katalysatoren (c) umfassen dabei keine Verbindungen, die bereits unter die Definition der Verbindungen der allgemeinen Formel W-Kw-NH-C(O)-CH₂-Q (d) fallen.

Als übliche Katalysatoren, die zur Herstellung der Polyurethane eingesetzt werden können, seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin, genannt. Ebenso kommen organische Metallverbindungen in Betracht, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Einbaubare Aminkatalysatoren weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, 1-(3-aminopropyl)pyrrolidine, Dimethylaminopropylamin, 3-Dimethyaminopropyl-N,N-dimethylpropan-1,3-diamin, Dimethyl-2-(2-amino-ethoxyethanol), (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 ami-nopropyl)-bis(aminoethylether), 1,4-Diazabicyclo[2.2.2]octane-2-methanol und 3-Dimethylaminoisopropyl-diisopropanolamin oder Mischungen davon.

Werden Katalysatoren (c) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gesamtgewicht der Komponente (b), eingesetzt werden.

Als Verbindungen der allgemeinen Formel W-Kw-NH-C(O)-CH₂-Q (d) werden solche Verbindungen eingesetzt. Dabei steht W für eine cyclisches Amin, das substituiert sein kann und das über ein Stickstoffatom an -Kw- gebunden ist. Vorzugsweise steht W- für einen Pyrollidin-Rest, der über das Stickstoffatom an -Kw- gebunden ist. Dabei können die Wasserstoffatome des Pyrrolidin-Rests substituiert sein, vorzugsweise ist der Pyrrolidin-Rest aber unsubstituiert. -Kwsteht für einen linearen oder verzweigtkettigen, vorzugsweise linearen Kohlenwasserstoffrest mit vorzugsweise 1 bis 20, besonders bevorzugt 1 bis 10, mehr bevorzugt 2 bis 5 und insbesondere 3 Kohlenstoffatomen. N, C, O und H in der Formel stehen für Atome der chemischen Elemente Stickstoff (N), Kohlenstoff (C), Sauerstoff (O) und Wasserstoff (H). Q steht für Cyanid (CN) oder einen elektronenziehenden Rest der allgemeinen Formel -C(O)-R², wobei R² für einen Rest steht, ausgewählt ist aus der Gruppe bestehend aus -NH₂, -NH-R³ -NR⁴R⁵, OR⁶ oder R⁷, wobei R³, R⁴, R⁵, R⁶ und R⁷ unabhängig ausgewählt sind aus der Gruppe bestehend aus aliphatischen, araliphatischen oder aromatischen Kohlenwasserstoffen, die substituiert sein können. In einer bevorzugten Ausführungsform steht R² für -CH₃, -OCH₃, -C₂H₅, -OC₂H₅, -C₃H₇, -OC₃H₇, -CₗH₂ₗ₊₁, -O-CₗH₂ₗ₊₁, -O-CₗH₂ₗOH, -O-(C₂H₄O)ₘH, -O-(C₃H₆O)ₘH, -O-(C₄H₈O)ₘH, -NHCH₃, -NH-CₗH₂ₗ₊₁, -NH-(C₂H₄O)ₘH, -NH-(C₃H₆O)ₘH, -NH-CₗH₂ₗ-NH₂, -NH-CₗH₂ₗ-OH, -NH-(C₂H₄O)ₘ-C₂H₄NH₂, -NH-(C₃H₆O)ₘ-C₃H₆NH₂, -NH-(C₄H₈O)ₘ-C₄H₈NH₂, -NH-NH-CₗH₂ₗ₊₁, -NH-NH-CₗH₂ₗOH, - NH-NH-CₗH₂ₗNH₂, -NH-NH-(C₂H₄O)ₘH, -NH-NH-(C₂H₄O)ₘ-C₂H₄NH₂, -NH-NH-(C₃H₆O)ₘH, -NH-NH-(C₃H₆O)ₘ-C₃H₆NH₂, -NH₂, wobei l für ganze Zahlen von 1 bis 20, vorzugsweise 1 bis 10 und m für ganze Zahlen von 1 bis 50, bevorzugt von 1 bis 25 steht, und besonders bevorzugt für - NH-NH₂ oder -NH-Kw-W, wobei -Kw- und -W die oben beschriebene Bedeutung haben, R² steht in diesem Fall für NH-R³ und R³ für den substituierten, aliphatischen Kohlenwasserstoff Kw-W. Insbesondere wird als Verbindung (d) eine Verbindung der allgemeinen Formel W-Kw-NH-C(O)-CH₂-C(O)-NH-K_{W}-W eingesetzt, wobei weiter bevorzugt -Kw- und -W jeweils identisch sind.

### Besonders bevorzugte Verbindungen (d) sind:

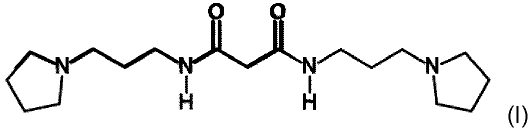

und 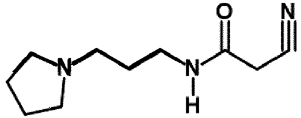 (II),

### insbesondere die Verbindung nach Formel (I).

Dabei wird Verbindung (d) vorzugsweise in einer Menge von 0,001 bis 5 Gew.-%, insbesondere 0,05 bis 2 Gew.-%, bezogen auf das Gewicht der Komponente (b), eingesetzt.

Wenn das erfindungsgemäße Polyurethan als Polyurethan-Schaumstoff vorliegen soll, enthalten erfindungsgemäße Reaktionsmischungen noch Treibmittel (e). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt.

Als Kettenverlängerer und Vernetzungsmittel (f) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Wenn Kettenverlängerer und/oder Vernetzungsmittel eingesetzt werden sollen, werden diese üblicherweise in Mengen von 0,5 bis 60 Gew.-%, vorzugsweise 1 bis 40 Gew.-% und besonders bevorzugt 1,5 bis 20 Gew.-%, jeweils bezogen auf das Gesamtgewicht der Komponenten (b) bis (f), eingesetzt.

Werden Kettenverlängerungsmittel und/oder Vernetzungsmittel (f) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Antioxidantien, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Insbesondere die Kombination aus Verbindungen (d) und Antioxidantien führt zu einer weiter ver-ringerten Emission organischer Substanzen, wie Aldehyden. Beispiele für Antioxidantien sind phenolische Substanzen, wie 2,6-Ditert-butyl-4-methylphenol, Benzenepropanolsaure, 3,5-Bis (1, 1-dimethylethyl)-4-hydroxy-C7-C9 verzweigte Alkylester, aminischer Antioxidantien, wie N,N'-Di-isopropyl-p-phenylenediamin, Thiosynergisten, wie Dilauryl-5-thiodipropionat, Phosphite und Phosphonite, wie Triphenylphosphite, Diphenylalkylphosphite, Benzofuranone und Indoli-none, andere Antioxidantien, wie 0-, N- und S-Benzylverbindungen, Triazinverbindungen, Amide von /3 -(3,5-Di-tert-butyl-4-hydroxyphenyl)propionsaure, Esters von substituierten und unsubstituierten Benzoesauren, Nickelverbindungen und Esters von /3-10 Thiodipropionisaure oder eine Mischung aus zwei oder mehreren dieser Antioxidantien. Solche Antioxidantien bei-spielsweise beschrieben in WO2017125291 und sind kommerziell erhältlich beispielsweise un-ter den Handelsnahmen Irganox 1076, Irganox 245, Irganox 2000, Irganox E201 (Vitamin E), Irganox 5057 oder Irgafos 38.

Im Allgemeinen werden bei der Herstellung des erfindungsgemäßen Polyurethans die Polyisocyanate (a), die Polyole (b), Katalysatoren (c), Verbindungen (d) und, falls eingesetzt die Treibmittel (e) und Kettenverlängerungsmittel (f) und/oder Vernetzungsmittel (g) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d) und gegebenenfalls (e), (f) und (g) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e), (f) und (g) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (g) für die Herstellung von erfindungsgemäßen Polyurethanen unterscheiden sich jeweils quantitativ und qualitativ nur geringfügig, wenn als erfindungsgemäßes Polyurethan ein thermoplastisches Polyurethan, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch die Verbindungen (d) zugegeben.

Neben dem erfindungsgemäßen Verfahren ist auch ein Polyurethan, erhältlich nach einem erfindungsgemäßen Verfahren Gegenstand der Erfindung. Die erfindungsgemäßen Polyurethane werden vorzugsweise in geschlossenen Räumen eingesetzt, beispielsweise als thermische Isoliermaterialien in Wohngebäuden, wie Isolierungen für Rohre und Kühlschränke, im Möbelbau, beispielsweise als Dekorelemente oder als Sitzpolster, als Matratzen sowie im Innenraum von Fahrzeugen, beispielsweise im Automobilinnenraum, beispielsweise als Lenkräder, Armaturenbretter, Türverkleidungen, Teppichhinterschäumungen, akustische Schaumstoffe, wie Dachhimmel, sowie Kopfstützen oder Schaltknäufe. Dabei sind für erfindungsgemäße Polyurethane insbesondere die Formaldehydemissionen deutlich gegenüber einem Referenzprodukt ohne Additiv aber auch gegenüber Additiven zur Aldehydreduktion aus dem Stand der Technik reduziert. Weiter emittieren erfindungsgemäße Polyurethane nur sehr geringe Mengen an flüchtigen, organischen Verbindungen (VOC) gemäß VDA 278 und VDA 277. Schließlich zeigen die erfindungsgemäßen Polyurethane ein hervorragendes Alterungsverhalten und Hitzebeständigkeit Die Erfindung soll im Folgenden anhand von Beispielen verdeutlicht werden.

Herstellung der erfindungsgemäßen Verbindung A1:

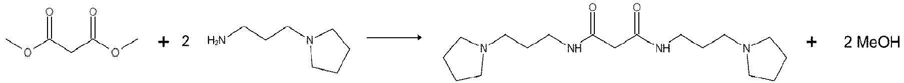

12,6 g Malonsäuredimethylester und N-(Aminopropyl)pyrrolidine 25,1 g wurden 6 h bei 150 °C in einem Glaskolben erhitzt. Anschließend wurde bei dieser Temperatur vorsichtig Vakuum angelegt und bei 10 mbar über 1 h flüchtige Verbindungen (Ausgangsstoffe (N-(Aminopropyl)pyrrolidin siedet bei 82 °C und 27 mbar) und entstehendes Methanol) abdestilliert. Es wurde eine klare rote Flüssigkeit erhalten. Der vollständige Umsatz des Malonsäuredimethylesters wurde per NMR Spektroskopie kontrolliert. Nach Abkühlen auf Raumtemperatur wurde das Produkt wurde ohne weitere Aufreinigung verwendet.

### Herstellung der Vergleichssubstanz V1:

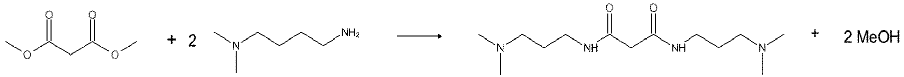

48,49 g Malonsäuredimethylester und 3-(Dimethylamino)-1-propylamin 93,75 g wurden 6 h bei 120 °C in einem Glaskolben erhitzt. Anschließend wurde bei dieser Temperatur vorsichtig Vakuum angelegt und bei 12 mbar über 1 h flüchtige Verbindungen abdestilliert. Es wurde eine klare orange Flüssigkeit erhalten. Der vollständige Umsatz des Malonsäuredimethylesters wurde per NMR Spektroskopie kontrolliert. Nach Abkühlen auf Raumtemperatur wurde das Produkt wurde ohne weitere Aufreinigung verwendet.

Die Herstellung der Polyurethanmaterialien erfolgte wie folgt:

### Ausgangsmaterialien:

- Polyol 1:: Glyceringestartetes Polyetherpolyol auf Basis von Ethylenoxid und Propylenoxid mit einer mittleren OH-Zahl von 27 mg KOH/g, einer mittleren Funktionalität von 2,5 und einem Propylenoxidgehalt, bezogen auf das Gesamtgewicht des Polyethers, von 78 Gew.-%.
- Polyol 2:: Glyceringestartetes Polyetherpolyol auf Basis von Ethylenoxid und Propylenoxid mit einer mittleren OH-Zahl von 35 mg KOH/g, einer mittleren Funktionalität von 2,7 und einem Propylenoxidgehalt, bezogen auf das Gesamtgewicht des Polyethers, von 85 Gew.-%.
- Polyol 3:: Glyceringestartetes Polyetherpolyol auf Basis von Ethylenoxid und Propylenoxid mit einer mittleren OH-Zahl von 42 mg KOH/g, einer mittleren Funktionalität von 2,7 und einem Propylenoxidgehalt, bezogen auf das Gesamtgewicht des Polyethers, von 25 Gew.-%.
- Polyol 4:: Polyesterpolyol aus Adipinsäure, 1,4-Butandiol, Isopththalsäure und Monoethylenglykol mit einer mittleren OH-Zahl von 55 mg KOH/g.

- TEOA:: Triethanolamin
- Isopur SU-12021:: Schwarzpaste der Firma ISL-Chemie
- Emulgator:: Halbester eines Maleinsäure-Olefin-Copolymers
- Jeffcat^{®} ZF10:: Katalysator der Firma Huntsman

Iso 1: Polymeres Diphenylmethandiisocyanat (PMDI) mit einem NCO-gehalt von 31,5 Gew.-% und einer mittleren Funktionalität von 2,7.

Iso 2: Prepolymer aus Methylendiphenyldiisocyanat, dipropyleneglykol und polyetherpolyol mit einer mittleren OH-Zahl von 250 mg KOH/g, einer Funktionalität von 2 und einem Propylenoxydgehalt, bezogen auf das Gesamtgewicht des Polyethers, von 83 Gew.-%, NCO-Gehalt von 23 Gew.-% und einer mittleren Funktionalität von 2.

Iso 3: Mischung aus Methylendiphenyldiisocyanat und dem entsprechenden Carbodiimid mit einem NCO-Gehalt von 29,5 Gew.-% und einer mittleren Funktionalität von 2,2.

Dabei wurden die Folgenden Verbindungen (d) eingesetzt:
V1: 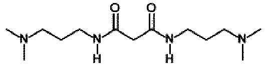
V2: 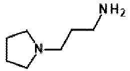
A1: 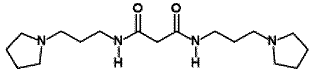
A2:

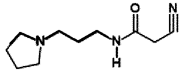

Die Mischung A wurde durch Vermischen von folgenden Komponenten hergestellt:
50.0 Gew.-Teile Polyol 1
34.3 Gew.-Teile Polyol 2
2.0 Gew.-Teile Polyol 3
6.0 Gew.-Teile Polyol 4
0.5 Gew.-Teile TEOA
0.5 Gew.-Teile Emulgator
0.5 Gew.-Teile Isopur SU-12021
2.9 Gew.-Teile Wasser
0.3 Gew.-Teile Jeffcat ZF10
0.5-0.8 Gew.-Teile Verbindungen V1, V2, A1 oder A2 (jeweils äqimolare Mengen, bezogen auf den katalytisch aktiven tertiären Stickstoff)

Die Isocyanat Komponente wurde durch Vermischen von folgenden Komponenten hergestellt:
30.0 Gew.-Teile Iso 1
35.0 Gew.-Teile Iso 2
35.0 Gew.-Teile Iso 3

Die Mischung A, enthaltend die Verbindungen V1, V2, A1 bzw. A2, und die IsocyanatKomponente wurden bei einem Isocyanatindex von 100 miteinander vermischt und in eine geschlossene Form gegeben, so dass Formteile mit einer mittleren Dichte von 120 g/L erhalten wurden.

Zur Bestimmung von Formaldehyd und Acetaldehyd wurde analog ASTM D-5116-06 vorgegangen. Die Kammergröße betrug 4,7 Litern. Als Polyurethanproben wurden Stücke mit einer Größe von 110 mm x 100 mm x 25 mm aus dem Innern des Schaumstoffs eingesetzt. Die Temperatur in der Meßkammer betrug während der Messung 65 °C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd und Acetaldehyd im Eluat wurde mittels HPLC bestimmt. Nach diesem Aufbau liegt die Nachweisgrenze für Formaldehydemissionen bei ≤ 11 µg/m³. und für Acetaldehydemissionen bei ≤ 6 µg/m³

Tabelle 1: In der Kammer bestimmte Formaldehydwerte von Halbhart-Schäume bei Zugabe der jeweiligen Additiven V1 - V2 und A1 - A2 in den angegebenen Konzentrationen, jeweils angegeben in Gewichtsteilen der oben Angegebenen Mischung A.

**Tabelle 1**

| | **v1** | **V2** | **A1** | **A2** |
|---|---|---|---|---|
| Gew.-Teile | 0,53 | 0,5 | 0,63 | 0,76 |
| Startzeit (s) | 9 | 10 | 10 | 9 |
| Steigzeit (s) | 64 | 73 | 76 | 79 |
| FRD (g/l) | 51,2 | 55,2 | 53,6 | 54,6 |
| | | | | |
| Formaldehyd (µg/m3) | 114 | 143 | 58 | 71 |
| Acetaldehyd (µg/m3) | 171 | 169 | 169 | 175 |

Tabelle 1 zeigt, dass durch den Einsatz der erfindungsgemäßen Komponente (d) in der Mischung A gegenüber den Vergleichsverbindungen V1 und V2 die Formaldehydemissionen jeweils sehr stark reduziert werden.

## Patentansprüche

1. Verfahren zur Herstellung von Polyurethanen bei dem man
(a) Polyisocyanat,
(b) polymeren Verbindungen mit gegenüber Isocyanaten reaktiven Gruppen,
(c) gegebenenfalls Katalysatoren,
(d) Verbindungen der allgemeinen Formel W-Kw-NH-C(O)-CH₂-Q und gegebenen falls
(e) Treibmittel,
(f) Kettenverlängerungs- und oder Vernetzungsmittel und
(g) Hilfsmittel und/oder Zusatzstoffe
zu einer Reaktionsmischung vermischt und die Reaktionsmischung zum Polyurethan ausreagieren lässt,
wobei
W- für eine cyclisches Amin steht, das substituiert sein kann und das über ein Stickstoffatom an -Kw- gebunden ist,
-Kw- für einen linearen oder verzweigtkettigen Kohlenwasserstoffrest steht,
N für ein Stickstoffatom, C für ein Kohlenstoffatom, O für ein Sauerstoffatom und H für ein Wasserstoffatom steht und
-Q für Cyanid (-CN) oder einen elektronenziehenden Rest der allgemeinen Formel -C(O)-R² steht und -R² für einen Rest steht, ausgewählt ist aus der Gruppe bestehend aus -NH₂, - NH-R³ -NR⁴R⁵, -OR⁶ oder -R⁷, wobei -R³, -R⁴, -R⁵, -R⁶ und -R⁷ unabhängig ausgewählt sind aus der Gruppe bestehend aus aliphatischen, araliphatischen oder aromatischen Kohlenwasserstoffen, die substituiert sein können.

2. Verfahren nach Anspruch 1, **dadurch gekennzeichnet, dass** W für einen Pyrrolidinring steht, der substituiert sein kann.

3. Verfahren nach einem der Ansprüche 1 oder 2 **dadurch gekennzeichnet, dass** -Kw- für einen linearen, unsubstituierten Kohlenwasserstoffrest mit 1 bis 10 Kohlenstoffatomen steht.

4. Verfahren nach einem der Ansprüche 1 bis 3, **dadurch gekennzeichnet, dass** Q für -C(O)-NH-Kw-W steht, wobei -Kw- und -W wie in Anspruch 1 definiert sind.

5. Verfahren nach Anspruch 4, **dadurch gekennzeichnet, dass** W für einen Pyrrolidinring steht, der substituiert sein kann, Kw- für einen linearen, unsubstituierten Kohlenwasserstoffrest mit 1 bis 10 Kohlenstoffatomen steht und W und Kw jeweils identisch sind.

6. Verfahren nach einem der Ansprüche 1 bis 5, **dadurch gekennzeichnet, dass** die polymeren Verbindungen mit gegenüber Isocyanaten reaktiven Gruppen (b) Polyetherole enthalten.

7. Verfahren nach einem der Ansprüche 1 bis 6, **dadurch gekennzeichnet, dass** die Katalysatoren (c) einbaubare Aminkatalysatoren enthalten, wobei einbaubare Aminkatalysatoren mindestens eine, gegenüber Isocyanaten reaktive Gruppe aufweisen.

8. Verfahren nach Anspruch 7, **dadurch gekennzeichnet, dass** als einbaubare Katalysatoren Verbindungen eingesetzt werden, die neben der bzw. den gegenüber Isocyanaten reaktiven Gruppen eine oder mehrere tertiäre, aliphatische Aminogruppen aufweisen.

9. Verfahren nach Anspruch 8, **dadurch gekennzeichnet, dass** mindestens eine tertiäre Aminogruppe des einbaubaren Katalysators zwei Reste, unabhängig voneinander ausgewählt aus Methyl- und Ethylrest, sowie einen weiteren organischen Rest trägt.

10. Verfahren nach einem der Ansprüche 1 bis 9, **dadurch gekennzeichnet, dass** das Polyurethan ein Polyurethanschaumstoff mit einer mittleren Dichte von 10 bis 850 g/L ist.

11. Verfahren nach einem der Ansprüche 1 bis 10, **dadurch gekennzeichnet, dass** das Polyurethan ein kompaktes Polyurethan mit einer mittleren Dichte von mehr als 850 g/L ist.

12. Verfahren nach einem der Ansprüche 1 bis 11, **dadurch gekennzeichnet, dass** das Polyurethan eine Matratze oder Teil eines Möbelstücks ist.

13. Polyurethan, herstellbar nach einem Verfahren gemäß einem der Ansprüche 1 bis 12.

14. Verwendung von Polyurethanen nach Anspruch 13 in geschlossenen Räumen.

15. Verwendung nach Anspruch 14, wobei der geschlossene Raum der Innenraum von Verkehrsmitteln ist.

## Claims

1. A process for producing polyurethanes comprising mixing
(a) polyisocyanate,
(b) polymeric compounds having isocyanate-reactive groups,
(c) optionally catalysts,
(d) compounds of general formula W-Kw-NH-C(O)-CH₂-Q and optionally
(e) blowing agents,
(f) chain-extenders and/or crosslinking agents and
(g) auxiliaries and/or additives
to afford a reaction mixture and reacting the reaction mixture to afford polyurethane,
wherein
W- represents a cyclic amine which may be substituted and which is bonded to -Kw- via a nitrogen atom.
-Kw- represents a linear or branched-chain hydrocarbon radical,
N represents a nitrogen atom, C represents a carbon atom, O represents an oxygen atom and H represents a hydrogen atom and
-Q represents cyanide (-CN) or an electronegative radical of general formula -C(O)-R² and -R² represents a radical selected from the group consisting of -NH₂, -NH-R³ -NR⁴R⁵, -OR⁶ or -R⁷, wherein -R3, -R⁴, -R⁵, -R⁶ and -R⁷ are independently selected from the group consisting of aliphatic, araliphatic or aromatic hydrocarbons which may be substituted.

2. The process according to claim 1, wherein W represents a pyrrolidine ring which may be substituted.

3. The process according to either of claims 1 or 2, wherein -Kw- represents a linear, unsubstituted hydrocarbon radical having 1 to 10 carbon atoms.

4. The process according to any of claims 1 to 3, wherein Q represents -C(O)-NH-Kw-W, wherein -Kw- and -W are as defined in claim 1.

5. The process according to claim 4, wherein W represents a pyrrolidine ring which may be substituted, Kw-represents a linear, unsubstituted hydrocarbon radical having 1 to 10 carbon atoms and W and Kw are each identical.

6. The process according to any of claims 1 to 5, wherein the polymeric compounds having isocyanate-reactive groups (b) comprise polyetherols.

7. The process according to any of claims 1 to 6, wherein the catalysts (c) comprise incorporable amine catalysts, wherein incorporable amine catalysts comprise at least one isocyanate-reactive group.

8. The process according to claim 7, wherein the incorporable catalysts employed are compounds which, in addition to the isocyanate-reactive groups, comprise one or more tertiary, aliphatic amino groups.

9. The process according to claim 8, wherein at least one tertiary amino group of the incorporable catalyst bears two radicals independently of one another selected from methyl and ethyl and also a further organic radical.

10. The process according to any of claims 1 to 9, wherein the polyurethane is a polyurethane foam having an average density of 10 to 850 g/L.

11. The process according to any of claims 1 to 10, wherein the polyurethane is a compact polyurethane having an average density of more than 850 g/L.

12. The process according to any of claims 1 to 11, wherein the polyurethane is a mattress or part of an item of furniture.

13. A polyurethane producible by a process according to any of claims 1 to 12.

14. The use of polyurethanes according to claim 13 in enclosed spaces.

15. The use according to claim 14, wherein the enclosed space is the interior of means of transport.

## Revendications

1. Procédé pour la préparation de polyuréthanes, dans lequel on mélange
(a) un polyisocyanate,
(b) des composés polymères comportant des groupes réactifs vis-à-vis d'isocyanates,
(c) éventuellement des catalyseurs,
(d) des composés de formule générale W-Kw-NH-C(O)-CH₂-Q et éventuellement
(e) des agents porogènes,
(f) des extenseurs de chaîne et/ou des agents de réticulation et
(g) des adjuvants et/ou additifs
pour obtenir un mélange réactionnel et on fait complètement réagir le mélange réactionnel pour aboutir au polyuréthane,
W- représentant une amine cyclique qui peut être substituée et qui est liée à -Kw- par l'intermédiaire d'un atome d'azote,
-Kw- représentant un radical hydrocarboné linéaire ou à chaîne ramifiée,
N représentant un atome d'azote, C représentant un atome de carbone, 0 représentant un atome d'oxygène et H représentant un atome d'hydrogène et
-Q représentant le groupe cyanure (-CN) ou un radical attirant les électrons, de formule générale -C(O)-R² et -R2 représentant un radical qui est choisi dans le groupe constitué par -NH2, -NH-R3-NR4R5, -OR⁶ ou -R7, R3, R4, R5, -R6 et -R7 étant choisis indépendamment les uns des autres dans le groupe constitué par des hydrocarbures aliphatiques, araliphatiques ou aromatiques, qui peuvent être substitués.

2. Procédé selon la revendication 1, **caractérisé en ce que** W représente un cycle pyrrolidine qui peut être substitué.

3. Procédé selon l'une quelconque des revendications 1 et 2, **caractérisé en ce que** -Kw- représente un radical hydrocarboné linéaire, non substitué, ayant de 1 à 10 atomes de carbone.

4. Procédé selon l'une quelconque des revendications 1 à 3, **caractérisé en ce que** Q représente C(O) NH Kw W, - Kw et W étant tels que définis dans la revendication 1.

5. Procédé selon la revendication 4, **caractérisé en ce que** W représente un cycle pyrrolidine qui peut être substitué, Kw- représente un radical hydrocarboné linéaire, non substitué, ayant de 1 à 10 atomes de carbone, et W et Kw sont chaque fois identiques.

6. Procédé selon l'une quelconque des revendications 1 à 5, **caractérisé en ce que** les composés polymères comportant des groupes réactifs vis-à-vis d'isocyanates (b) comprennent des polyétherols.

7. Procédé selon l'une quelconque des revendications 1 à 6, **caractérisé en ce que** les catalyseurs (c) comprennent des catalyseurs de type amine incorporables, les catalyseurs de type amine incorporables comportant au moins un groupe réactif vis-à-vis d'isocyanates.

8. Procédé selon la revendication 7, **caractérisé en ce qu'**en tant que catalyseurs incorporables sont utilisés des composés qui, outre le ou les groupes réactifs vis-à-vis d'isocyanates, comportent un ou plusieurs groupes amino aliphatiques tertiaires.

9. Procédé selon la revendication 8, **caractérisé en ce qu'**au moins un groupe amino tertiaire du catalyseur incorporable porte deux radicaux, choisis indépendamment l'un de l'autre parmi le radical méthyle et le radical éthyle, ainsi qu'un autre radical organique.

10. Procédé selon l'une quelconque des revendications 1 à 9, **caractérisé en ce que** le polyuréthane est une mousse de polyuréthane ayant une densité moyenne de 10 à 850 g/l.

11. Procédé selon l'une quelconque des revendications 1 à 10, **caractérisé en ce que** le polyuréthane est un polyuréthane compact ayant une densité moyenne de plus de 850 g/l.

12. Procédé selon l'une quelconque des revendications 1 à 11, **caractérisé en ce que** le polyuréthane est un matelas ou une partie d'un meuble.

13. Polyuréthane, pouvant être préparé conformément à un procédé selon l'une quelconque des revendications 1 à 12.

14. Utilisation de polyuréthanes selon la revendication 13 dans des espaces clos.

15. Utilisation selon la revendication 14, dans laquelle l'espace clos est l'intérieur de moyens de transport.
